## Europäisches Patentamt
## European Patent Office
## Office européen des brevets

(11) Publication number: **0 089 760**
**B1**

(12) # EUROPEAN PATENT SPECIFICATION

(45) Date of publication of patent specification: **12.08.87**

(51) Int. Cl.⁴: **G 01 N 25/72**

(21) Application number: **83301088.7**

(22) Date of filing: **01.03.83**

(54) Transient thermography.

(30) Priority: **18.03.82 GB 8207888**

(43) Date of publication of application:
**28.09.83 Bulletin 83/39**

(45) Publication of the grant of the patent:
**12.08.87 Bulletin 87/33**

(84) Designated Contracting States:
**AT BE CH DE FR GB IT LI LU NL SE**

(56) References cited:
**FR-A-2 381 304**
**US-A-3 672 204**
**US-A-3 808 439**

**SOVIET JOURNAL OF NON-DESTRUCTIVE TESTING, no. 6, June 1975, New York, USA; Y.A. POPOV et al. "Detection of peeling in three-layer objects, using a high-speed thermal scanner", pages 717-721**

(73) Proprietor: **UNITED KINGDOM ATOMIC ENERGY AUTHORITY**
**11 Charles II Street**
**London SW1Y 4QP (GB)**

(72) Inventor: **Reynolds William Norman**
**9 Elsley Road**
**Tilehurst Reading Berkshire (GB)**
Inventor: **Milne, James Morris**
**24 Victoria Road**
**Abingdon Oxon (GB)**
Inventor: **Child, John William**
**97 Enborne Road**
**Newbury Berks (GB)**

(74) Representative: **Mansfield, Peter Turquand et al**
**United Kingdom Atomic Energy Authority**
**Patents Branch 11 Charles II Street**
**London SW1Y 4QP (GB)**

(56) References cited:
**REVUE DE PHYSIQUE APPLIQUEE, vol. 17, no. 1, January 1982, Orsay, France; A. SIBLINI et al. "Mesure simultanée du pouvoir thermoélectrique et de la diffusivité thermique par la méthode de l'impulsion thermique", pages 29-35**

Courier Press, Leamington Spa, England.

## Description

This invention relates to non-destructive testing techniques and in particular to transient infra-red thermography techniques, that is to say techniques involving the subjecting of a body to a pulse of heat and the subsequent recording of infra-red radiation emitted by the body.

Such techniques can be used to detect internal defects within, for example, laminated materials, or within bonded joints. However application of these techniques has been hindered by the fact that existing methods of heating bodies are imprecise and have relatively slow rise times, thus making these techniques insensitive in comparison to other non-destructive testing techniques.

For example Y. A, Popov and A. A. Ketkovich et al. in "Delamination Detection Using a High Speed Thermal Scanner" (Soviet Journal of NDT, 1975, No. 6) describe the use of a 16 frame/sec, 100 line, infra-red scanner to investigate delaminations in a composite material, a pulse of heat being provided by illuminating the surface of the material with lamps for a period of between 10 seconds and 45 seconds.

It is also known, from FR—A—2 381 304, to detect defects in a red-hot steel plate by using a visible-light television camera, it is being stressed as important to use a sensor sensitive to wavelengths significantly shorter than the wavelength of peak intensity from a black body at such a temperature. Such a technique is of course not applicable to objects at or near room temperature, and only detects surface flaws rather than sub-surface defects. Yet again it is known from US—A—3 672 204 to measure the surface thermal impedance of a portion of a surface of an object by imposing a transient heat flow into the portion of the surface and integrating the resulting surface temperature response over time, the temperature being sensed by the emitted infrared radiation. The heat may be provided by a flash lamp or by an electrically heated layer in contact with the surface. The technique does not enable small defects or local variations in thermal impedance to be detected, as it utilizes radiation emitted all over the portion of the surface. This document also indicates that a thermal image of the surface can be obtained with an ordinary photographic camera, if desired, by coating the surface with a thermally-responsive-image-generating material, and then subjecting the surface to a brief pulse of heat. This last technique, although relatively simple to perform, does necessitate first coating the object with the image-generating material and is therefore a slow process, especially where a large surface area is to be investigated.

According to the present invention there is provided a method for obtaining an image indicating the presence of discontinuities within a body of a material having a surface which is capable of converting incident radiant energy to thermal energy, comprising the operations of irradiating a region of the surface with a pulse of radiant energy and determining the subsequent distribution of thermal energy by means of an infra-red scanning camera, characterised in that the camera produces a television compatible signal which is recorded by a video recorder, the duration of the pulse is less than the time taken by the camera to scan one frame, and that individual frames from the recording are subsequently selected for examination.

The use of such a short duration pulse has the advantage of providing much better spatial resolution than a long pulse. The pulse may be provided by means of a photographic flash tube, and the duration of the pulse is preferably less than 20 milliseconds.

Defects of different types and at different depths below the surface show up the best at different times after the pulse. The optimum time depends also upon the nature of the material. By selecting individual frames for examination the time can be readily chosen to be the optimum for each defect.

The method thus provides an entirely noncontact detection method for defects and discontinuities within a structure.

The material the surface of which is capable of converting optical energy to thermal energy may comprise for example carbon fibre reinforced plastic or glass fibre reinforced plastic. When applying the method to a material the surface of which reflects a substantial proportion of incident radiation an optically absorbent coating such as matt black paint may be applied to the surface.

The subsequent distribution of thermal energy may be observed over the surface of the body which has been irradiated with the pulse of optical energy, or may be observed over a different surface of the body.

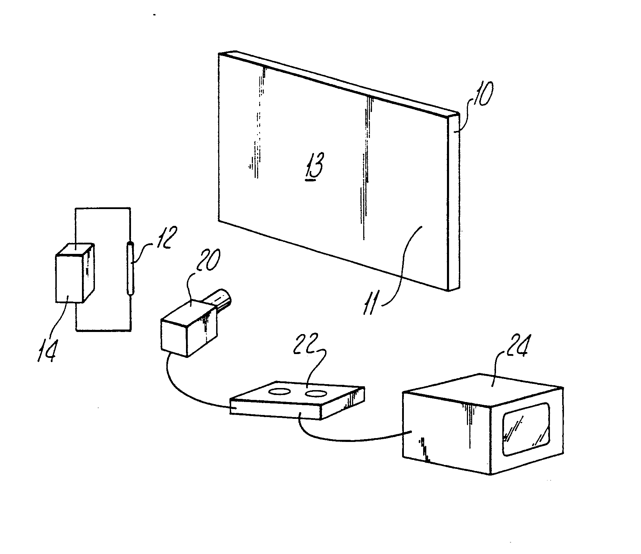

The invention will now be described, by way of example only, and with reference to the accompanying drawing which is a diagrammatic view of an apparatus for carrying out the method of the invention.

As shown in the drawing, a large rectangular sheet 10 about 40cm by 50cm of carbon fibre reinforced plastics material, which is to be checked for the presence of internal delaminations, and whose surface is matt black, is set up with one side 11 facing a 2000 joule photographic flash tube 12, which is connected to a power supply unit 14. An infrared camera 20 which produces a TV compatible output signal is set up facing the side 11 of the sheet 10, and is connected to a video recorder 22 and a television monitor set 24. The camera 20 produces a complete frame in 40 milliseconds, consisting of two interlineated fields, each taking 20 milliseconds. It is sensitive to radiation of wavelength between 8 and 13 micrometres, and so is sensitive to the peak radiation intensity from a black-body radiator at about 300K, i.e. near room temperature, and it is sensitive to temperature differences of about 0.1K near room temperature. A suitable camera is available from Barr and Stroud Ltd.,

Anniesland, Glasgow, model number IR 18 Mark 2.

When the power supply unit 14 is energised, the flash tube 12 emits an optical pulse, the duration of which is about one millisecond. Light from the flash tube 12 incident on the surface 13 of the side 11 of the sheet 10 is absorbed and converted to thermal energy within the surface 13 of the side 11 of the sheet 10, providing about 1 joule/cm$^2$ of the thermal energy, and raising the surface temperature by about 5K. Heat flow then takes place within the sheet 10 so as to distribute the thermal energy to cooler regions of the sheet 10. Any defects within the sheet 10 will differ in thermal conductivity from neighbouring regions of the sheet 10 in which there are no defects, and so will affect the temperature of the sheet 10 in the vicinity of the defects.

At the same time as the power supply unit 14 is energised, the camera 20 and the video recorder 22 are switched on so as to record the temperature distribution over the surface 13 of the sheet 10 and are left on until the temperature of the surface 13 of the side 11 of the sheet 10 has become uniform. The temperature distribution over the surface 13 of the side 11 of the sheet 10 following irradiation is subsequently determined by playing back the recording taken by the video recorder 22 on the monitor 24, and indivdual frames are selected for examination.

Defects of different types and at different depths below the surface 13 of the side 11 of the sheet 10 will be seen with best contrast at different times after the absorption the optical pulse, this time depending upon the diffusivity of the material (i.e. thermal conductivity divided by the product of density and specific heat capacity, which for a resin is about $1 \times 10^{-6}$ m$^2$/s and for metals may be between ten and a hundred times greater). In cases where the defects are seen with best contrast a fraction of a second after the optical pulse, slow replay of the video recording may be used to observe the defects.

Although the apparatus has been described as comprising an infra-red camera 20 on the same side of the sheet 10 as the flash tube 12, it will be understood that the camera 20 can be placed so as to view the opposite side of the sheet 10.

## Claims

1. A method for obtaining an image indicating the presence of discontinuities within a body (10) of a material having a surface (13) which is capable of converting incident radiant energy to thermal energy, comprising the operations of irradiating a region of the surface (13) with a pulse of radiant energy and determining the subsequent distribution of thermal energy by means of an infra-red scanning camera (20), characterised in that the camera (20) produces a television compatible signal which is recorded by a video recorder (22), the duration of the pulse is less than the time taken by the camera (20) to scan one frame, and that individual frames from the recording are subsequently selected for examination.

2. A method as claimed in claim 1 wherein the pulse of radiant energy is provided by a photographic flash tube (12).

3. A method as claimed in any one of the preceding Claims including the initial operation of applying a radiant energy absorbent coating to the region of the surface (13).

## Patentansprüche

1. Verfahren zur Erzeugung einer das Vorhandensein von Unregelmäßigkeiten in einem Körper (10) wiedergebenden Abbildung, wobei der Körper aus einem Material mit einer Fläche besteht, die einfallende Strahlungsenergie in thermische Energie umwandeln kann, wonach eine Zone der Fläche (13) mit einem Strahlungsenergie-Impuls bestrahlt wird und dann die anschließende Verteilung der thermischen Energie mit Hilfe einer Infrarotkamera (20) bestimmt wird, dadurch gekennzeichnet, daß die Kamera (20) zur Erzeugung eines Fernseh-kompatiblen Signals ausgebildet ist, welches von einem Videorecorder (22) aufzeichenbar ist, daß die Impulsdauer kleiner gewählt ist als die Zeitdauer, welche von der Kamera (20) zur Abtastung eines Halbbildes benötigt wird, und daß dann einzelne Halbbilder von der Aufzeichnung anschließend für eine Überprüfung ausgewählt werden.

2. Verfahren nach Anspruch 1, dadurch gekennzeichnet, daß der Strahlungsenergie-Impuls mit Hilfe einer photographischen Blitzlichtröhre (12) erzeugt wird.

3. Verfahren nach einem der Ansprüche 1 oder 2, dadurch gekennzeichnet, daß zu Beginn eine Strahlungsenergie absorbierende Beschichtung auf die genannte Zone der Fläche (13) aufgetragen wird.

## Revendications

1. Procédé pour obtenir une image indiquant la présence de discontinuités au sein d'un corps (10) d'une matière ayant une surface (13) capable de convertir de l'énergie radiante incidente en de l'énergie thermique, comprenant les opérations consistant à irradier une région de la surface (13) par une impulsion d'énergie radiante et à déterminer la distribution subséquente de l'énergie thermique, à l'aide d'une caméra (20) d'exploration dans l'infrarouge, procédé caractérisé en ce que la caméra (20) produit un signal compatible avec la télévision, qui est enregistré par un enregistreur vidéo (22), la durée l'impulsion est inférieure au temps pris par la caméra (20) pour observer par balayage une image, et en ce que l'on choisit, pour les examiner, des images individuelles de l'enregistrement.

2. Procédé selon la revendication 1, dans lequel l'impulsion d'énergie radiante est fournie par un tube (12) émettant des éclairs pour photographie.

3. Procédé selon l'une quelconque des revendications précédentes, comprenant l'opération initiale consistant à appliquer, à la région de la surface (13), un revêtement absorbant l'énergie radiante.